Europäisches Patentamt

European Patent Office

Office européen des brevets

(19)

(11) Numéro de publication : **0 126 687**
**B1**

(12) **FASCICULE DE BREVET EUROPÉEN**

(45) Date de publication du fascicule du brevet :
08.07.87

(51) Int. Cl.⁴ : **C 03 B 35/20**

(21) Numéro de dépôt : **84400996.9**

(22) Date de dépôt : **16.05.84**

(54) **Maintien des feuilles de verre dans un cadre en vue notamment de leur réchauffage, de leur bombage, de leur trempe et de leur transport.**

(30) Priorité : **16.05.83 FR 8308044**

(43) Date de publication de la demande :
**28.11.84 Bulletin 84/48**

(45) Mention de la délivrance du brevet :
**08.07.87 Bulletin 87/28**

(84) Etats contractants désignés :
**BE DE FR GB IT LU NL SE**

(56) Documents cités :
**US-A- 2 134 797**
**US-A- 2 537 803**
**US-A- 3 606 443**

(73) Titulaire : **SAINT-GOBAIN VITRAGE**
**Les Miroirs 18, avenue d'Alsace**
**F-92400 Courbevoie (FR)**

(72) Inventeur : **Aubry, Claude**
**22 rue Serpente**
**F-60150 Thourotte (FR)**
Inventeur : **Chaumette, Jacques**
**2 avenue du Moulin**
**F-60150 Thourotte (FR)**
Inventeur : **Letemps, Bernard**
**5 avenue du gros Buisson**
**F-60150 Thourotte (FR)**
Inventeur : **Petitcollin, Jean-Marc**
**12 rue de Verdun**
**F-60150 Le Plessis Brion (FR)**
Inventeur : **Gatzweiler, Werner**
**Rheinertstrasse 7**
**Heineberg (DE)**
Inventeur : **Rissmann, Heinz-Bernd**
**Vereinsstrasse 5-7**
**D-5100 Aachen (DE)**
Inventeur : **Vanachen, Luc**
**Lothringerweg 4**
**Eupen (BE)**
Inventeur : **Zeitzen, Jürgen**
**Lange Hecke 8**
**Herzogenrath (DE)**

(74) Mandataire : **Leconte, Jean-Gérard et al**
**Saint-Gobain Recherche 39, Quai Lucien Lefranc**
**F-93304 Aubervilliers Cedex (FR)**

## Description

La présente invention concerne le maintien dans un cadre, d'une feuille de verre, en position verticale ou approximativement verticale, en particulier pendant qu'on la soumet à différents traitements, par exemple de réchauffage en vue du bombage et/ou de la trempe, de bombage et/ou de trempe et également pendant qu'on la transporte, notamment entre ces divers postes de traitement.

Il est connu par les brevets US-A-2 618 905 et US-A-3 298 809 de maintenir des feuilles de verre dans un cadre pendant l'opération de trempe, en les faisant reposer par leur bord inférieur sur la traverse horizontale basse du cadre, et en les retenant latéralement à leur partie supérieure par des couples de taquets (US-A-2 618 905) ou par une barre d'appui coopérant avec des pièces de verrouillage (US-A-3 298 809).

Ces moyens de maintien supérieurs que sont les taquets ou la barre d'appui associée aux pièces de verrouillage sont de relativement petites dimensions pour ne pas perturber les traitements subis par les feuilles de verre, si bien que celles-ci risquent de s'en dégager, de n'être plus maintenues et ainsi de tomber, si elles perdent de leur rigidité à la suite de leur réchauffage, se cintrent et s'affaissent un peu de trop sous leur propre poids.

Le brevet US-A-2 537 803 propose lui aussi un cadre pour le maintien de feuilles de verre, en particulier pendant leur bombage, cadre auquel sont associés des moyens de support destinés à recevoir la tranche inférieure des feuilles de verre et des moyens de maintien agissant sur la partie supérieure des feuilles de verre, les moyens de maintien s'appliquant sur la tranche supérieure des feuilles de verre et étant librement mobiles suivant la direction verticale. Le coulissement possible des moyens de maintien suivant la direction verticale facilite la mise en place des feuilles de verre dans le cadre, permet une adaptation des moyens de maintien à des formes et dimensions des feuilles de verre présentant une certaine variété et également autorise un certain affaissement des feuilles de verre tout en continuant à les maintenir. Cependant le maintien ne continue à être assuré que si l'affaissement est limité, s'il se produit bien dans le plan du cadre et que si les feuilles de verre ne sont pas totalement déstabilisées. Dans d'autres cas, les feuilles de verre sortent du cadre de maintien, échappent à tout moyen de retenue, tombent, se cassent, en encombrent les installations.

Par ailleurs sont connus des brevets de pinces d'accrochage de feuilles de verre aptes à serrer le bord desdites feuilles de verre par leurs mors lorsqu'elles sont tirées vers le haut. (Ainsi par exemple le brevet US-A-3 606 443). Mais ces pinces sont le seul moyen de maintien des feuilles de verre, et elles laissent obligatoirement sur toutes les feuilles de verre la marque de leurs mors, préjudiciable à la fois à l'esthétique, à la solidité, et aux bonnes qualités optiques des feuilles de verre.

L'invention vise à supprimer ce risque de chute des feuilles de verre, vise à continuer à maintenir lesdites feuilles de verre en position verticale ou approximativement verticale, même lorsqu'elles sont affaissées et/ou cintrées, et vise également à éviter les marques de pinces sans pour cela introduire de gêne pour les traitements, en particulier thermiques.

Elle propose pour cela un cadre de maintien en position verticale ou approximativement verticale d'une feuille de verre durant un ou plusieurs stades de sa fabrication et de son traitement, formé de deux montants verticaux et de traverses horizontales équipées de moyens de support destinés à recevoir la tranche inférieure de la feuille de verre et de moyens de maintien supérieurs qui s'appliquent sur la partie supérieure de la feuille de verre et qui sont librement mobiles suivant la direction verticale moyennant un guidage latéral, dans lequel chaque moyen de maintien supérieur comporte un piston dont la tige coulisse dans un manchon de guidage disposé au-dessus de la traverse horizontale supérieure ou d'éléments solidaires de la traverse, ce piston étant couplé à une pince dont les deux branches s'articulent sur un axe solidaire de la tige de piston, se terminent d'un côté chacune par un mors et sont reliées chacune de l'autre côté à un bras pivotant autour d'un axe commun fixe appartenant au manchon.

Il apparaît que les moyens de maintien comportant de simples pistons qui demeurent en contact seulement avec la tranche supérieure des feuilles de verre, uniquement sous l'effet de leur propre poids, retiennent suffisamment lesdites feuilles de verre. Il n'est pas indispensable de doter les côtés desdits moyens de maintien, de pattes orientées verticalement et destinées à retenir latéralement les feuilles de verre. Toutefois de telles pattes ou de préférence seulement des saillies, ne sont pas incompatibles et elles peuvent au contraire renforcer la retenue des feuilles de verre. Si le maintien des feuilles de verre se fait uniquement ou presque uniquement par leur tranche supérieure, leurs faces latérales peuvent ainsi être dégagées et libres de tout contact. Elles ne subissent donc pas les inconvénients imputables aux éléments de maintien latéraux importants, à savoir encombrement gênant l'approche de matériel de traitement ou écran préjudiciable aux traitements, notamment thermiques.

En raison de leur libre mobilité suivant la direction verticale, ces moyens de maintien peuvent accompagner des mouvements verticaux de l'arête supérieure des feuilles de verre. Même si les feuilles de verre se cintrent, ces moyens de maintien conservent le contact et continuent à les retenir en position verticale ou approximativement verticale à l'intérieur du cadre.

Lorsque la feuille de verre maintenue dans le cadre s'effondre, son arête supérieure descend et avec elle les pistons qui constituent ses moyens de maintien supérieurs dans ledit cadre ; les pistons entraînent alors la fermeture des pinces qui leur sont associées sur le bord supérieur de la feuille de verre qui se trouve ainsi retenue. Les pinces constituent à partir de ce moment là des moyens de suspension de la feuille de verre à l'intérieur du cadre, lui évitant de tomber hors du cadre.

L'invention sera maintenant décrite plus en détail en référence aux figures jointes qui représentent :

Figure 1 une vue d'ensemble schématique d'un cadre porteur équipé de moyens de maintien supérieurs et inférieurs conformes à l'invention, dans laquelle les moyens de maintien supérieurs ne sont que partiellement représentés,

Figure 2 une variante des moyens de support inférieurs de la feuille de verre dans le cadre porteur.

Figure 3 une vue agrandie de certains éléments d'un moyen de maintien supérieur en coupe suivant la ligne III-III de la fig. 1.

Figure 4 un moyen de maintien supérieur complet en forme de piston associé à une pince en position ouverte.

Figure 5 le moyen de maintien supérieur complet en forme de piston associé à la pince de la fig. 4, en position fermée de la pince, c'est-à-dire en position de rattrapage de la feuille de verre.

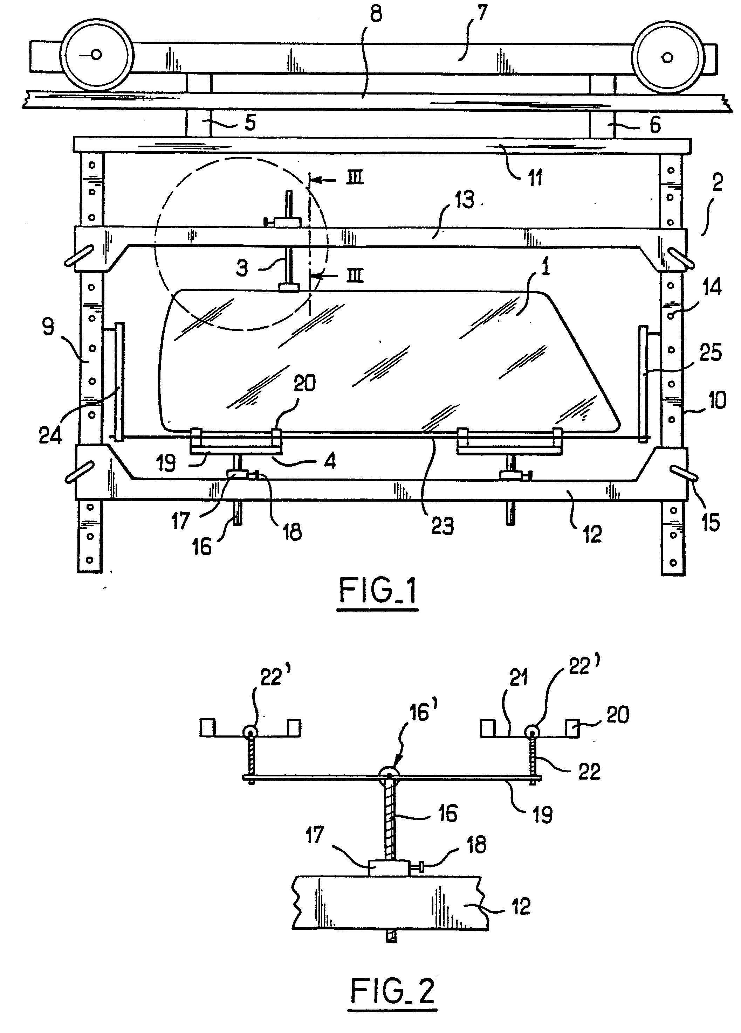

La figure 1 montre une feuille de verre 1 maintenue dans un cadre porteur 2 à l'aide de moyens de maintien supérieurs globalement désignés par la référence 3 et de moyens de support inférieurs globalement désignés par la référence 4. Ce cadre 2 est attaché par des pattes 5 et 6 sous un chariot 7 mobile sur des rails 8 permettant le transport de la feuille de verre 1 ainsi maintenue à différents postes de travail, notamment dans un four de réchauffage du verre, à un poste de bombage, à un poste de trempe.

Le cadre 2 est formé d'éléments métalliques résistant à la chaleur. Il est constitué de deux montants 9 et 10, de deux traverses horizontales, une supérieure 11 et une inférieure 12. Avantageusement une autre traverse horizontale 13 est prévue en position intermédiaire réglable entre les traverses 11 et 12. Avantageusement encore, la position de la traverse inférieure 12 est également réglable en hauteur. Le réglage de la position des traverses 12 et 13 s'obtient par des moyens connus, par exemple les montants 9 et 10 peuvent être percés d'une série de trous 14 à différentes hauteurs et les traverses 12 et 13 se fixent sur les montants 9 et 10 dans les trous à la hauteur choisie, à l'aide de clavettes 15. Grâce à ces possibilités de réglage, le cadre 2 est adaptable à la hauteur des différentes feuilles de verre 1.

La traverse inférieure 12 porte les moyens de support 4 des feuilles de verre constitués de simples plots d'appui posés directement sur ladite traverse 12 ou comme montré sur les fig. 1 et 2 reposant sur un système intermédiaire réglable en hauteur.

Les moyens de support 4 montrés fig. 1 comportent chacun une tige 16 à position en hauteur réglable par coulissement dans un perçage de la traverse 12 et blocable à l'aide d'une bague 17 munie d'une vis 18 de serrage sur la tige 16, une barre horizontale 19 fixée par son milieu sur l'extrémité haute de la tige 16 et, portés par les extrémités de la barre 19, des plots d'appui 20, par exemple en forme de U, entre les branches desquels vient s'insérer la feuille de verre 1. De préférence, chaque tige 16 reste libre de pivoter à l'intérieur du perçage de la traverse 12, même lorsque sa position en hauteur est bloquée.

Avantageusement pour permettre une meilleure adaptation des moyens de support 4 à la forme du contour et du profil de la feuille de verre 1, un degré supplémentaire de liberté est prévu comme montré fig. 2 en intercalant entre la barre 19 et les plots d'appui 20, à chaque extrémité de la barre 19 une plateforme 21 montée libre d'osciller verticalement autour d'un axe horizontal 22' porté par l'extrémité supérieure d'une tige verticale 22, libre de pivoter sur l'extrémité de la barre 19. En outre, la barre 19 peut elle aussi osciller verticalement autour d'un axe horizontal 16' porté par l'extrémité supérieure de la tige 16.

Cet ensemble constitue alors une « balancelle » dans laquelle tous les éléments horizontaux peuvent osciller verticalement et dans laquelle tous les éléments verticaux peuvent pivoter. Chaque plateforme 21 porte un plot d'appui 20 à chacune de ses deux extrémités.

Avantageusement, pour faciliter la mise en place des feuilles de verre, l'amplitude possible de ces divers mouvements d'oscillation et éventuellement de pivotement peut être limitée.

Pour aider à l'alignement des divers plots d'appui 20 lors de la mise en place d'une feuille de verre initialement plane, une règle horizontale 23, reliée aux montants 9 et 10 du cadre 2 par l'intermédiaire de deux bras 24 et 25 montés libres d'osciller est prévue, la longueur de ces deux bras 24 et 25 étant telle que la règle 23 porte sur les plots 20, lorsque sous la seule action de la gravité, l'ensemble des bras 24 et 25 et de la règle 23 a tendance à se mettre dans le plan vertical du cadre 2. Lorsqu'il sera nécessaire de renoncer à l'alignement des plots 20, par exemple lorsque la feuille de verre mise en place dans le cadre 2 sera bombée, lesdits plots 20 prendront la position qui leur sera imposée et repousseront alors légèrement la règle 23.

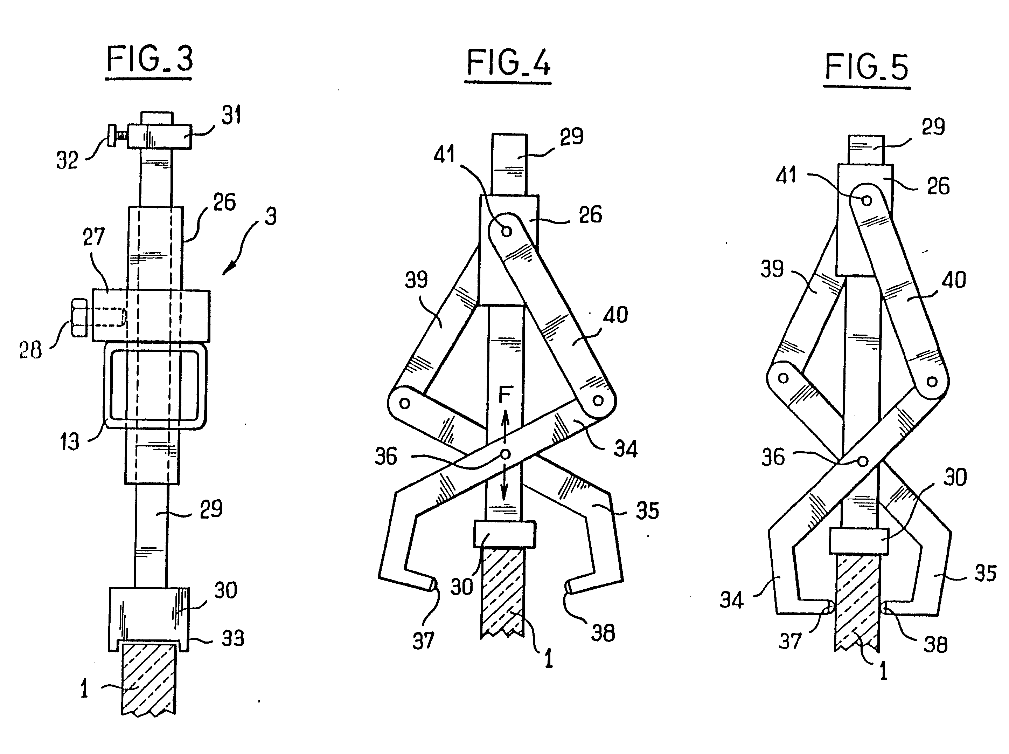

Pour la clarté des dessins les moyens de maintien supérieurs ne sont que partiellement représentés sur les figures 1 et 3, les pinces qui constituent un élément de ces moyens de maintien n'étant visibles que sur les figures 4 et 5.

Les moyens de maintien supérieurs 3 sont fixés à la traverse intermédiaire 13. Comme on peut le voir sur la fig. 3, cette traverse 13 est par exemple un tube de section carrée percé verticalement en divers endroits pour la fixation de moyens de maintien 3. Chaque moyen de maintien 3 possède un manchon cylindrique 26, monté coulissant au travers de l'un des perçages verticaux de la traverse 13, blocable dans la position voulue par une bague 27, disposée autour du manchon, au-dessus de la traverse 13 et munie d'une vis 28 de serrage dudit manchon 26, une tige de piston 29 guidée à l'intérieur du manchon 26 terminée à son extrémité basse par un piston 30 destiné à être en contact avec la tranche supérieure des feuilles de verre 1 à maintenir. A l'intérieur du manchon 26, la tige 29 peut se déplacer librement suivant la direction verticale. Afin de limiter le mouvement vers le bas de cette tige 29, son extrémité supérieure dépassant du manchon 26 est munie d'une bague d'arrêt 31 serrée sur ladite tige par une vis 32.

Eventuellement pour favoriser la retenue latérale des feuilles de verre 1, le piston peut être muni de légères saillies 33 orientées vers le bas et encadrant latéralement le bord supérieur de la feuille de verre 1, sur une petite hauteur seulement, de façon à ne pas perturber les traitements pratiqués sur le verre.

Eventuellement encore, pour favoriser la tenue de la feuille de verre 1 par le piston 30, en contact seulement avec la tranche supérieure de ladite feuille de verre et appliqué sur ladite tranche seulement du fait de son poids propre et de celui de la tige de piston 29, on peut augmenter la rugosité de la face inférieure du piston 30.

L'augmentation de la rugosité et la mise en place de saillies 33 sont des mesures indépendantes, éventuellement cumulables.

Pour pallier le danger qui existe que la feuille de verre 1 se cintre ou se tasse sur elle-même, par exemple lors d'une température trop élevée dans le four de réchauffage, ou dans le cas d'un séjour trop prolongé dans ce four, à cause d'une panne par exemple, et que sa tranche supérieure échappe au piston 30, on complète chaque moyen de maintien supérieur 3 par une pince associée à la tige de piston 29, normalement en position ouverte et avec des mors qui ne touchent pas le verre, mais qui se ferme et dont les mors viennent saisir la feuille de verre lorsque celle-ci s'effondre trop ou de façon générale échappe à la retenue par le piston 30.

Une telle pince associée à un moyen de maintien à piston est montrée sur les fig. 4 et 5.

Chaque pince possède deux branches 34 et 35 articulées sur un axe commun 36, recourbées à leurs extrémités servant à saisir et terminées par deux mors ou points de touche 37 et 38 en un matériau classique, apte à saisir le verre et à résister sans détérioration ni oxydation aux températures élevées de l'ordre de 600 à 700 °C.

L'axe 36 traverse la tige de piston 29 et peut se déplacer avec elle, verticalement, dans les deux sens figurés par la double flèche F. Cet axe peut être attaché en n'importe quel endroit mobile verticalement d'un moyen de maintien supérieur 3, la tige de piston 29 ou le piston 30 lui-même.

L'autre extrémité de chaque branche 34, 35 s'articule sur un bras 39, 40 ; les deux bras 39 et 40 aboutissant sur un même axe de pivotement fixe 41, par exemple appartenant au manchon 26 déjà mentionné en relation avec la fig. 3 et qu'on retrouve avec la même fonction sur les fig. 4 et 5.

Les dimensions des pinces sont telles qu'elles sont ouvertes en position de travail.

Avantageusement, les longueurs des branches 34 et 35, les proportions de longueur de branches de part et d'autre de l'articulation 36, la position de l'articulation 36 sur le piston 30 ou la tige de piston 29 sont telles que les pinces étant ouvertes et le piston 30 reposant sur la tranche supérieure de la feuille de verre 1, les deux mors 37 et 38 se trouvent disposés plus bas que ladite tranche de la feuille de verre 1, donc au niveau et de chaque côté de la partie marginale supérieure de la feuille 1, garantissant ainsi dans tous les cas, même celui où la pince se gripperait et ne fonctionnerait pas normalement, une retenue latérale de la feuille de verre 1 si sa tranche s'échappait du piston 30.

Pour faciliter le cintrage de feuilles de verre 1 maintenues dans le cadre porteur 2, les moyens de support inférieurs 4, ainsi que les moyens de maintien supérieurs 3 sont disposés sur les traverses 12 et 13 aux endroits où le vitrage cintré rencontre le plan du cadre 2.

Avantageusement encore, pour favoriser la retenue des feuilles de verre 1 cintrées, les moyens de maintien supérieurs 3 peuvent être attachés à la traverse intermédiaire 13 par le biais de « balancelles » identiques à celles montrées fig. 2 et utilisées pour soutenir la tranche inférieure des feuilles de verre. Toutefois, lorsqu'elles sont destinées à participer au maintien de la partie supérieure des feuilles de verre, ces balancelles supérieures ont une position inversée par rapport aux balancelles inférieures, c'est-à-dire qu'elles sont suspendues sous la traverse intermédiaire 13. Munies de plots 20 orientés vers le bas elles peuvent retenir des feuilles de verre, mais avantageusement ces plots 20 sont remplacés chacun par un système à piston tel que montré fig. 3 ou un système à piston associé à une pince tel que montré sur les fig. 4 et 5. Un système d'alignement identique à celui prévu pour les balancelles inférieures peut également exister.

Si comme illustré par la fig. 5, la feuille de verre 1 glisse vers le bas, pour une raison quelconque, affaissement du verre du fait d'un séjour trop prolongé dans le four par exemple, le piston 30 descend également et reste en contact avec la tranche supérieure de la feuille de verre 1, sous l'effet de son propre poids et du poids propre des branches 34 et 35 de la pince. De ce fait, l'axe d'articulation 36 solidaire de la tige de piston 29 s'abaisse de la même quantité, ce qui entraîne la fermeture de la pince, compte tenu de la liaison des branches 34 et 35 par les bras 39 et 40 avec le point fixe constitué par l'axe de pivotement 41 appartenant au manchon 26.

Après un certain abaissement, la pince est suffisamment fermée pour que ses mors 37 et 38 portent sur la feuille de verre 1 et la serrent.

Aussitôt que la pince a saisi la feuille de verre, le piston 30 ne peut plus continuer à descendre car il est alors maintenu dans sa position par les bras 39 et 40 et les branches de pince 34 et 35. Une descente ultérieure de la feuille de verre 1 est donc empêchée.

Une feuille de verre 1 insérée à l'intérieur du cadre 2 peut par exemple être transportée dans un four de réchauffage du verre où elle est portée à haute température, sortie du four et acheminée à un poste de bombage où elle subit un bombage à axe horizontal et/ou vertical, la liberté accordée aux moyens de support inférieurs 4 et de maintien supérieurs 3 autorisant ce bombage, puis finalement trempée.

En principe, sauf accident, les faces de la feuille de verre ne sont jamais en contact avec les éléments de maintien, il n'y a donc aucune perturbation des traitements, ni aucune marque sur les faces de ladite feuille.

En cas d'accident, tel que température du four anormalement élevée, séjour trop prolongé dans le four, échappement aux moyens de retenue, etc. .., la feuille de verre continuera à être maintenue par les pistons 30 qui sont construits pour suivre son affaissement et à la limite sera rattrapée par les pinces, ce qui évitera la détérioration des installations ou tout du moins leur encombrement par des débris de verre si la feuille tombait hors du cadre 2 et se brisait, et permettra la récupération de la feuille de verre.

## Revendications

1. Cadre de maintien en position verticale ou approximativement verticale d'une feuille de verre (1) durant un ou plusieurs stades de sa fabrication et de son traitement, formé de deux montants verticaux et de traverses horizontales équipées de moyens de support (4) destinés à recevoir la tranche inférieure de la feuille de verre et de moyens de maintien supérieurs (3) qui s'appliquent sur la partie supérieure de la feuille de verre (1) et qui sont librement mobiles suivant la direction verticale moyennant un guidage latéral, caractérisé en ce que chaque moyen de maintien supérieur (3) comporte un piston (30) dont la tige (29) coulisse dans un manchon de guidage (26) disposé au-dessus de la traverse horizontale supérieure (13) ou d'éléments solidaires de la traverse (13), ce piston (30) étant couplé à une pince dont les deux branches (34, 35) s'articulent sur un axe (36) solidaire de la tige de piston (29), se terminent d'un côté chacune par un mors (37, 38), et sont reliées chacune de l'autre côté à un bras (39, 40) pivotant autour d'un axe commun fixe (41) appartenant au manchon (26).

2. Cadre selon la revendication 1, caractérisé en ce que la pince est dimensionnée de telle façon qu'elle est ouverte en position de travail et se referme pour amener ses mors en contact avec la feuille de verre (1) lorsque le piston (30) et sa tige (29) descendent.

3. Cadre selon l'une des revendications 1 ou 2, caractérisé en ce que les moyens de support inférieurs (4) sont constitués de plots (20) notamment en forme de U portés par plusieurs niveaux de barres ou plateformes horizontales (19, 21) libres de pivoter autour de tiges (22) ou (16).

4. Cadre selon la revendication 3, caractérisé en ce que les barres et plateformes horizontales (19, 21) portant les plots d'appui (20) sont montées libres d'osciller dans un plan vertical.

5. Cadre selon l'une des revendications 1 à 4, caractérisé en ce que des systèmes de balancelles formés par un ou plusieurs niveaux de barres ou plateformes horizontales libres de pivoter autour de tiges (22) ou (16) sont intercalés entre les moyens de maintien supérieurs (3) et la traverse horizontale du cadre qui les supporte.

6. Cadre selon la revendication 3, 4 ou 5, caractérisé en ce qu'il comporte une règle (23) d'alignement des plots d'appui (20), portée par deux bras (24) et (25) montés libres d'osciller sur les montants (9) et (10) du cadre, de longueur telle que ladite règle (23) entre en contact avec les plots (20) lorsqu'on la laisse sous la seule influence de la gravité.

7. Application du cadre selon les revendications précédentes au maintien du verre pendant son transport, son réchauffage, son bombage suivant un axe horizontal et/ou suivant un axe vertical, et/ou pendant sa trempe.

## Claims

1. A frame for holding a glass sheet (1) in a vertical or approximately vertical position during one or more stages of its manufacture and treatment, formed of two vertical uprights and horizontal transverse members provided with support means (4) intended to receive the lower edge of the glass sheet and upper holding means (3) applied to the upper part of the glass sheet (1) which are freely movable in the vertical direction subject to lateral guiding, characterised in that each upper holding means (3) comprises a piston (30) of which the rod (29) slides in a guide sleeve (26) arranged above the upper horizontal transverse member (13) or above elements integral with the transverse member (13), the piston (30) being coupled with a clamp of which the two branches (34, 35) are articulated on an axis member (36) integral with the piston rod (29), each branch terminating at one end with a jaw (37, 38) and connected at the other end to an arm (39, 40), the arms pivoting about a common fixed axis member (41) of the sleeve (26).

2. A frame according to claim 1, characterised in that the clamp is dimensioned so that it is open in a working position and closes to bring the jaws into contact with the glass sheet (1) when the piston (30) and its rod (29) descend.

3. A frame according to claim 1 or 2, characterised in that the lower support means (4) comprise blocks (20) which may be U-shaped carried by a plurality of levels of bars or horizontal platforms (19, 21) which are free to pivot about rods (22) or (16).

4. A frame according to claim 3, characterised in that the horizontal bars or platforms (19, 21) carrying the contact blocks (20) are mounted for free oscillation in a vertical plane.

5. A frame according to one of claims 1 to 4, characterised in that systems of balances formed by one or more levels of horizontal bars or platforms free to pivot about rods (22) or (16) are inserted between the upper holding means (3) and the horizontal transverse member of the frame which supports them.

6. A frame according to claim 3, 4 or 5 characterised in that it comprises a reference bar (23) for aligning the contact blocks (20), carried by two arms (24) and (25) mounted for free oscillation on the uprights (9) and (10) of the frame, of such length that said reference bar (23) comes into contact with the blocks (20) when it is hanging freely under gravity.

7. Application of a frame according to any preceding claim to the holding of glass during transport, heating, curving about a horizontal and/or vertical axis and/or during tempering thereof.

**Patentansprüche**

1. Halterahmen für eine Glasscheibe in vertikaler oder im wesentlichen vertikaler Lage während eines oder mehrerer Bearbeitungs- und Behandlungsvorgänge, mit zwei vertikalen Ständern und horizontalen Traversen, welche mit Stützeinrichtungen (4) zur Aufnahme des unteren Randes der Scheibe sowie mit oberen Halteeinrichtungen (3) versehen sind, die am obersten Abschnitt der Glasscheibe (1) angreifen und frei in vertikaler Richtung mittels einer seitlichen Führung bewegbar sind, dadurch gekennzeichnet, daß jede obere Halteeinrichtung (3) einen Kolben (30) aufweist, dessen Kolbenstange (29) innerhalb einer Führungshülse (26) gleitet, welche oberhalb der oberen horizontalen Traverse (13) oder oberhalb von mit der Traverse (13) verbundenen Elementen angeordnet ist, und daß der Kolben (30) mit einer Klemmeinrichtung gekoppelt ist, deren beide Arme (34, 35) auf einer mit der Kolbenstange (29) verbundenen Achse (36) angelenkt sind, an jeder Seite in einem Klemmbacken (37, 38) enden und auf der anderen Seite jeweils mit einem Arm (39, 40) verbunden sind, welcher um eine mit der Hülse (26) festen Achse schwenkt.

2. Halterahmen nach Anspruch 1, dadurch gekennzeichnet, daß die Klemmeinrichtung derart bemessen ist, daß sie in Arbeitsstellung geöffnet ist und sich beim Herabfahren des Kolbens (30) und der Kolbenstange (29) schließt, um die beiden Klemmbacken in Kontakt mit der Glasscheibe (1) zu bringen.

3. Halterahmen nach einem der Ansprüche 1 und 2, dadurch gekennzeichnet, daß die unteren Stützeinrichtungen (4) aus insbesondere U-förmigen Klötzen (20) gebildet sind, welche durch mehrere Nivellierungsstäbe oder horizontale Plattformen (19, 21) aufgenommen sind, welche frei um Stangen (22) oder (16) verschwenkbar sind.

4. Halterahmen nach Anspruch 3, dadurch gekennzeichnet, daß die Stäbe und horizontalen Plattformen (19, 21), welche die Stützklötze (20) aufnehmen, so angeordnet sind, daß sie frei in einer vertikalen Ebene schwenken können.

5. Halterahmen nach einem der Ansprüche 1 bis 4, dadurch gekennzeichnet, daß durch eine(n) oder mehrere, um Stangen (22) und (16) frei verschwenkbare Nivellierungsstäbe oder horizontale Plattformen gebildete Ausgleichssysteme zwischen den oberen Halteeinrichtungen (3) und der horizontalen Traverse des Gestelles angeordnet sind, welche diese abstützt.

6. Halterahmen nach Anspruch 3, 4 oder 5, dadurch gekennzeichnet, daß dieses ein Ausrichtlineal (23) für die Stützklötze (20) aufweist, welches von zwei frei schwenkbar auf Ständern (9) und (10) des Gestells angeordneten Armen (24) und (25) aufgenommen und derart lang ausgebildet ist, daß das Lineal (23) schwerkraftsbedingt in Kontakt mit den Klötzen (20) gelangt.

7. Verwendung des Halterahmens nach den vorhergehenden Ansprüchen zur Halterung von Glas während seines Transportes, seiner Erhitzung, des Wölbens längs einer horizontalen und/oder vertikalen Achse und/oder während seines Vorspannens.

FIG_1

FIG_2

FIG_3    FIG_4    FIG_5

0 126 687